# EUROPEAN PATENT SPECIFICATION

(11) **EP 4 118 789 B1**
(45) Date of publication and mention of the grant of the patent: **28.01.2026**
(21) Application number: 21704295.1
(22) Date of filing: 15.02.2021
(51) Int. Cl.: H04L 41/5019, H04L 41/40, H04W 48/18

(54) **NETWORK SERVICE MANAGEMENT**
NETZWERKDIENSTVERWALTUNG
GESTION DE SERVICE DE RÉSEAU

(30) Priority: 12.03.2020 EP 20404003
(43) Date of publication of application: 18.01.2023
(73) Proprietor: Telefonaktiebolaget LM Ericsson (PUBL), 164 83 Stockholm (SE)
(72) Inventor: DEHGHAN BIYAR, Elham, 34390 Istanbul (TR); TURK, Yekta, 34390 Istanbul (TR); DONMEZ, Yunus, 34730 Istanbul (TR)
(74) Representative: Ericsson
(86) International application number: PCT/EP2021/053651
(87) International publication number: WO 2021/180427

(56) References cited:
- WO-A1-2017/143047
- WO-A1-2019/210946
- WO-A1-2019/243874
- "3rd Generation Partnership Project; Technical Specification Group Services and System Aspects; Policy and charging control framework for the 5G System (5GS); Stage 2 (Release 16)", vol. SA WG2, no. V16.3.0, 22 December 2019 (2019-12-22), pages 1 - 112, XP051840934, Retrieved from the Internet <URL:ftp://ftp.3gpp.org/Specs/archive/23_series/23.503/23503-g30.zip 23503-g30.docx> [retrieved on 20191222]

## Description

### Technical Field

The disclosure relates to methods for managing services in a network and for provisioning network slices in the network. The disclosure also relates to nodes configured to operate in accordance with those methods.

### Background

Network slicing (NS) has become one of the core structures of modern networks, such as fifth generation (5G) networks. Network slicing can be used to categorise multiple virtual networks over a shared single physical framework. Network slicing can also be used to create customised and dedicated virtualised networks in the infrastructure of mobile network operators (MNOs). In an MNO network, it is possible to implement vertical and/or horizontal slicing.

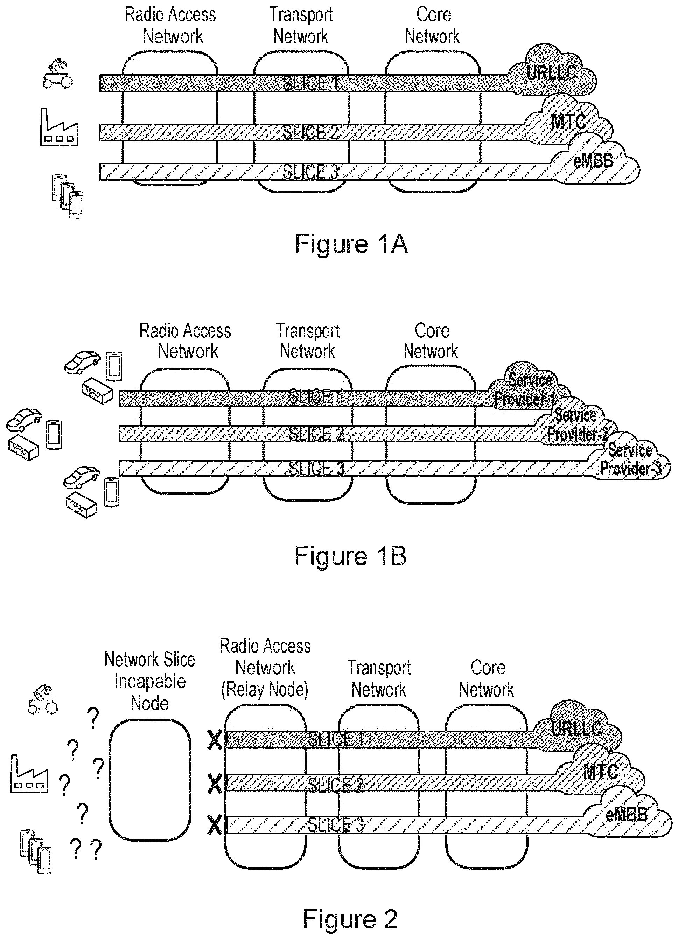

**Figures 1A and 1B** illustrate an MNO infrastructure with three network slices. The network slices extend across a core network, a transport network, and a radio access network (RAN). Figure 1A illustrates vertical network slicing, whereas Figure 1B illustrates horizontal network slicing. As illustrated in Figure 1A, vertical network slicing can comprise slicing the network based on different service types, such as dedicating a first network slice ("Slice 1") to an ultra-reliable low-latency communication (URLLC) service, a second network slice ("Slice 2") to a machine-type-communication (MTC) service, and a third network slice ("Slice 3") to an enhanced mobile broadband (eMBB) service, etc. As illustrated in Figure 1B, horizontal network slicing can comprise slicing the network based on different service providers, such as dedicating a first network slice ("Slice 1") to a first service provider ("Service Provider-1"), a second network slice ("Slice 2") to a second service provider ("Service Provider-2"), and a third network slice ("Slice 3") to a third service provider ("Service Provider-3"), etc.

Commonly, at the time of instantiating a network slice, a network slice orchestrator can be used to select the quality of service (QoS) needs of the network slices. The network slice orchestrator may check available resources and then instantiate and configure network functions to bind to a related network slice identity (ID).

The infrastructure of an MNO can be a heterogeneous environment. In an MNO network, there can be a combination of macrocells, smallcells, femtocells, picocells, unmanned aerial vehicle-base stations (UAV-BSs), Wi-Fi nodes, internet of things (IoT) gateways, etc. Other than macrocells, some nodes (e.g. smallcells, femtocells, picocells, UAV-BSs, Wi-Fi nodes (e.g. for offloading), etc.) are typically smaller and can be designed for enhancing coverage for certain areas. These nodes, excluding macrocells, are examples of limited capable nodes (LCNs). LCNs can connect to a core network (CN), e.g. over a relay base station in a RAN. LCNs can have different kinds of connection methods, e.g. self-backhauling, integrated access backhaul (IAB) techniques (e.g. as defined by 3GPP Release-16), fibre optic connection, microwave transmission, etc.

LCNs can be utilised to provide or enhance coverage for certain small-scale areas in an MNO infrastructure. In an effort to obtain a cost-effective solution for the MNOs, the LCNs may be designed with limited computing capability, e.g. in terms of used software or hardware (e.g. chipsets, microprocessors, etc.). Due to the customized structure of the LCNs, they may not contain the configurative features and computing capabilities that may be present in macrocells. The LCNs can cause some problematic issues in relation to network slicing. In particular, since LCNs may not have the capability to create network slices, user equipments (UEs) may not experience the benefits of network slicing provided by MNOs during their connection to network slice incapable nodes (NSINs). In addition, there may be a connection problem for the UEs that need to operate with different network slices.

**Figure 2** illustrates the problem that may occur due to these NSINs in a network. As illustrated in Figure 2, an NSIN does not have the capability to create network slices. Thus, UEs cannot experience the benefits of network slices provided by the mobile network operator (MNO) while connected to the network via a NSIN. This problem can, for example, occur when there are nodes in the network that need to connect to an MNO infrastructure over a relay node. Currently, NSINs operate in 5G technologies and do not cover the equipment running in fourth generation (4G), third generation (3G) or second generation (2G) technologies. Furthermore, similar problems can occur due to the spectrum and network planning structure of MNOs as network slices may not be activated in some parts of the network.

Currently, in the telecommunications market, there can be many vendors (e.g. vendors of smallcells, femtocells, picocells, Wi-Fi nodes, etc.). Most of the products from these vendors may not have the capability to accomplish the advanced features of wireless communication networks. In the dense deployment of 5G networks, MNOs can utilise the products of these vendors. However, these products may be incapable of operating in a network slicing environment. For example, Wi-Fi nodes can be used for off-loading purposes in mobile networks and thus these nodes may not have the capability to operate in a network slice architecture. There is a requirement in network slice-based MNO architecture for each service to operate in its dedicated slice as the purpose of network slicing is to manage each service in its own slice of the network.

WO 2019/243874 A1 discloses methods and systems for online services applications and application functions to provide UE-generated information to network data analytics to support network automation and optimization. 3GPP TS 23.503 V16.3.0 defines a Stage 2 policy and charging control framework for the 5G System. WO 2019/210946 A1 discloses a management device for slice management of a communication network.

### Summary

It is an object of the disclosure to obviate or eliminate at least some of the above-described disadvantages associated with existing techniques.

The present invention is solely defined in the appended independent claims to which reference should be made. Advantageous features are set out in the appended dependent claims.

According to an aspect of the disclosure, there is provided a method for managing services in a network. The method is performed by a first node. The method comprises, in response to receiving a service for a user equipment (UE) from at least one second node that is incapable of handling network slices for providing the service, assigning the service to one of a plurality of network slices in the network based on a quality of service (QoS) indicator assigned to the service.

There is thus provided an advantageous method for managing services in a network. In particular, the method allows nodes, which may otherwise be incapable of accomplishing the advanced features of current generation telecommunications networks, to experience the benefits of network slicing. The use of the QoS indicator in the assignment of the service to one of a plurality of network slices in the network can allow the service to be differentiated from other services.

In some embodiments, the QoS indicator may be assigned to the service by a third node that may be connectable to the at least one second node via the first node. In this way, it is possible to differentiate between service flows from and/or to the at least one second node. Thus, it is possible to map differentiated service flows to network slices.

In some embodiments, the third node may be connectable to the at least one second node via the first node by a network slice provisioned, by a fourth node, to be dedicated to the at least one second node. In this way, the at least one second node can work from the first node in relaying techniques and/or the first node can be connectable to the third node to reach other parts of the network, e.g. the core network.

In some embodiments, assigning the service to one of the plurality of network slices in the network may be performed in response to receiving the QoS indicator assigned to the service. In this way, the method can be performed more efficiently.

In some embodiments, the QoS indicator may be unique to the service. In this way, the unique services for each network slice can be preserved.

In some embodiments, the QoS indicator may be based on a first parameter indicative of a priority of the network slice to which the service is assigned relative to one or more other network slices and/or a second parameter indicative of a QoS for the service in the network slice. In this way, the priority of the network slice (e.g. compared to other network slices) and/or the QoS for the service can be taken into account.

In some embodiments, the first parameter and/or second parameter may be predefined in the network. This can be useful in distinguishing network slice and network flow priority.

The method comprises checking for the at least one second node. In this way, it is possible to detect when at least one second node exists in order for the method to be performed efficiently.

In some embodiments, the method may comprise initiating transmission of a request to a fourth node for the fourth node to provision a network slice dedicated to the at least one second node. This allows ease of management for network slice provisioning.

According to another aspect of the disclosure, there is provided a first node. The first node comprises processing circuitry configured to operate in accordance with the method described earlier in respect of the first node. The first node thus provides the advantages discussed earlier in respect of the method performed by the first node. In some embodiments, the first node may comprise at least one memory for storing instructions which, when executed by the processing circuitry, cause the first node to operate in accordance with the method described earlier in respect of the first node.

According to another aspect of the disclosure, there is provided another method for managing services in a network. The method is performed by a third node. The method comprises assigning a QoS indicator to a service for a UE. The service is from at least one second node that is incapable of handling network slices for providing the service.

There is thus provided an advantageous method for managing services in a network. In particular, the method allows nodes, which may otherwise be incapable of accomplishing the advanced features of current generation telecommunications networks, to experience the benefits of network slicing.

In some embodiments, the method may comprise initiating transmission of the QoS indicator assigned to the service towards a first node for the first node to assign the service to one of a plurality of network slices in the network based on the QoS indicator. The use of the QoS indicator to assign the service to one of a plurality of network slices in the network allows the service to be differentiated from other services.

In some embodiments, the third node may be connectable to the at least one second node via the first node. In this way, the at least one second node can work from the first node in relaying techniques and/or the first node can be connectable to the third node to reach other parts of the network, e.g. the core network.

In some embodiments, transmission of the QoS indicator may be initiated via a network slice that is provisioned, by a fourth node, to be dedicated to the at least one second node. In this way, the burden of network slice management can be eased.

In some embodiments, the third node may be connectable to the at least one second node via the first node by the network slice provisioned by the fourth node.

In some embodiments, the QoS indicator may be unique to the service. In this way, the unique services for each network slice can be preserved.

In some embodiments, the QoS indicator may be based on a first parameter indicative of a priority of a network slice to which the service is assigned relative to one or more other network slices and/or a second parameter indicative of a QoS for the service in the network slice. In this way, the priority of the network slice (e.g. compared to other network slices) and/or the QoS for the service can be taken into account.

In some embodiments, the first parameter and/or second parameter may be predefined in the network. This can be useful in distinguishing network slice and network flow priority.

According to another aspect of the disclosure, there is provided a third node. The third node comprises processing circuitry configured to operate in accordance with the method described earlier in respect of the third node. The third node thus provides the advantages discussed earlier in respect of the method performed by the third node. In some embodiments, the third node may comprise at least one memory for storing instructions which, when executed by the processing circuitry, cause the third node to operate in accordance with the method described earlier in respect of the third node.

According to another aspect of the disclosure, there is provided a method for provisioning network slices in a network. The method is performed by a fourth node. The method comprises, in response to detection of at least one second node that is incapable of handling network slices for providing a service for a UE from the at least one second node, provisioning a network slice to be dedicated to the at least one second node for connecting the at least one second node to a third node for the third node to assign a QoS indicator to the service.

There is thus provided an advantageous method for provisioning network slices in a network. In particular, the method removes the issue which arises from nodes incapable of handling network slices being ill-equipped to handle services for a UE, which are more effectively dealt with by operating in a sliced network environment.

In some embodiments, connecting the at least second node to the third node may be via a first node for the first node to assign the service to one of a plurality of network slices in the network based on the QoS indicator assigned to the service. The use of the QoS indicator to assign the service to one of a plurality of network slices in the network allows the service to be differentiated from other services.

In some embodiments, the method may comprise creating a network slice dedicated to the at least one second node to provision the network slice or dedicating an existing slice to the at least one second node to provision the network slice.

In some embodiments, provisioning may be performed in response to a request for the fourth node to provision the network slice to be dedicated to the at least one second node.

According to another aspect of the disclosure, there is provided a fourth node. The fourth node comprises processing circuitry configured to operate in accordance with the method described earlier in respect of the fourth node. The fourth node thus provides the advantages discussed earlier in respect of the method performed by the fourth node. In some embodiments, the fourth node may comprise at least one memory for storing instructions which, when executed by the processing circuitry, cause the fourth node to operate in accordance with the method described earlier in respect of the fourth node.

According to another aspect of the disclosure, there is provided a method performed by a system. The method may comprise the method performed by one or more first nodes of the system as described earlier, the method performed by one or more third nodes of the system as described earlier, and/or the method performed by one or more fourth nodes of the system as described earlier. The method performed by the system thus provides the advantages discussed earlier in respect of the method performed by the first node, third node, and/or fourth node.

According to another aspect of the disclosure, there is provided a system. The system may comprise one or more first nodes as described earlier, one or more third nodes as described earlier, and/or one or more fourth nodes as described earlier. The system thus provides the advantages discussed earlier in respect of the method performed by the first node, third node, and/or fourth node.

According to another aspect of the disclosure, there is provided a computer program comprising instructions which, when executed by processing circuitry, cause the processing circuitry to perform the method described earlier in respect of the first node, third node, and/or fourth node. The computer program thus provides the advantages discussed earlier in respect of the method performed by the first node, third node, and/or fourth node.

According to another aspect of the disclosure, there is provided a computer program product, embodied on a non-transitory machine readable medium, comprising instructions which are executable by processing circuitry to cause the processing circuitry to perform the method described earlier in respect of the first node, third node, and/or fourth node. The computer program product thus provides the advantages discussed earlier in respect of the method performed by the first node, third node, and/or fourth node.

Therefore, advantageous techniques for managing services in a network and provisioning network slices in a network are provided.

### Brief description of the drawings

For a better understanding of the techniques, and to show how they may be put into effect, reference will now be made, by way of example, to the accompanying drawings, in which:
Figures 1A-B are block diagrams illustrating existing network architectures;
Figure 2 is a block diagram illustrating a problem with nodes that are incapable of handling network slices;
Figure 3 is a block diagram illustrating a first node according to an embodiment;
Figure 4 is a flowchart illustrating a method performed by a first node according to an embodiment;
Figure 5 is a block diagram illustrating a third node according to an embodiment;
Figure 6 is a flowchart illustrating a method performed by a third node according to an embodiment;
Figure 7 is a block diagram illustrating a fourth node according to an embodiment;
Figure 8 is a flowchart illustrating a method performed by a fourth node according to an embodiment;
Figure 9 is a block diagram illustrating a system according to an embodiment;
Figures 10A-B are block diagrams illustrating systems according to some embodiments;
Figure 11 is a block diagram illustrating a system according to an embodiment;
Figure 12 is a block diagram illustrating a system according to an embodiment;
Figure 13 is a flowchart illustrating a method according to an embodiment;
Figure 14 is a flowchart illustrating a method according to an embodiment;
Figure 15 is a flowchart illustrating a method according to an embodiment;
Figure 16 is a block diagram illustrating a first node according to an embodiment;
Figure 17 is a block diagram illustrating a third node according to an embodiment; and
Figure 18 is a block diagram illustrating a fourth node according to an embodiment.

### Detailed Description

As mentioned earlier, advantageous techniques for managing services in a network and provisioning network slices in a network are described herein. Herein, a service may be any type of service, such as a communication service. Examples of a service include, but are not limited to, an enhanced mobile broadband (eMBB) service, an ultra-reliable low-latency communication (URLLC) service, a machine-type communication (MTC) service, or any other service. The techniques described herein for managing services in a network and provisioning network slices in a network are implemented by a first node, third node, and/or fourth node.

A network slice can be defined as an (e.g. isolated, separate, or self-contained) end-to-end network. A network slice can be, for example, a portion of a physical network that connects two or more logical network interfaces or devices. A network slice may be implemented by reserving one or more functionalities along one or more network entities to provide an end-to-end service.

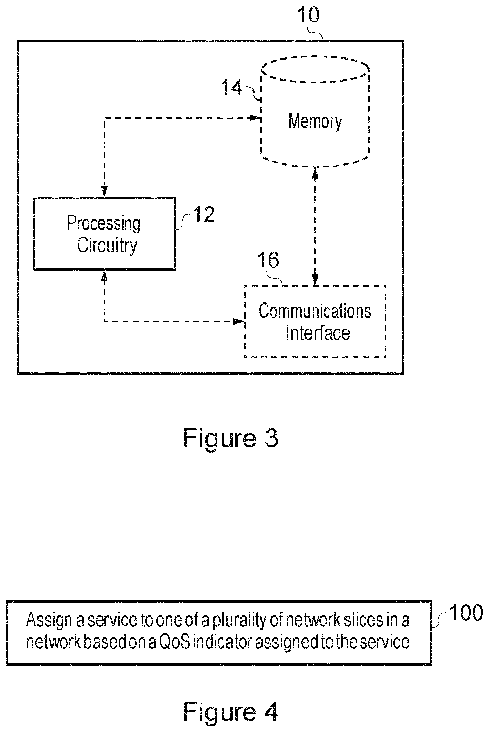

**Figure 3** illustrates a first node 10 in accordance with an embodiment. The first node 10 is for managing services in a network. The first node 10 may, for example, be a physical machine (e.g. a server) or a virtual machine (VM). In some embodiments, the first node 10 may be a node (e.g. a relay node) to which at least one second node connects in the network, where the at least one second node is incapable of handling network slices. In some embodiments, a radio access network (RAN) may comprise the first node 10. The first node 10 may be an apparatus, e.g. inside a RAN, according to some embodiments.

In some embodiments, the at least one second node referred to herein can comprise one or more smallcell nodes, one or more femtocell nodes, one or more picocell nodes, one or more Wi-Fi access points, one or more (e.g. loT) gateways, and/or one or more other nodes. The at least one second node referred to herein can be capable of various types of transmission, such as self-backhauling, integrated access backhauling (IAB), microwave, fibre, etc.

As illustrated in Figure 3, the first node 10 comprises processing circuitry (or logic) 12. The processing circuitry 12 controls the operation of the first node 10 and can implement the method described herein in respect of the first node 10. The processing circuitry 12 can be configured or programmed to control the first node 10 in the manner described herein. The processing circuitry 12 can comprise one or more hardware components, such as one or more processors, one or more processing units, one or more multi-core processors and/or one or more modules. In particular implementations, each of the one or more hardware components can be configured to perform, or is for performing, individual or multiple steps of the method described herein in respect of the first node 10. In some embodiments, the processing circuitry 12 can be configured to run software to perform the method described herein in respect of the first node 10. The software may be containerised according to some embodiments. Thus, in some embodiments, the processing circuitry 12 may be configured to run a container to perform the method described herein in respect of the first node 10.

Briefly, the processing circuitry 12 of the first node 10 is configured to, in response to receiving a service for a user equipment (UE) from at least one second node that is incapable of handling network slices for providing the service, assign the service to one of a plurality of network slices in the network based on a quality of service (QoS) indicator assigned to the service.

Herein, a QoS indicator can be any indicator that is indicative of a QoS with which the service is to be provided in the network slice to which it is assigned. This QoS can be relative to the QoS with which one or more other services are to be provided in the network slice and/or any other network slice. The at least one second node referred to herein may also be referred to as a network slice incapable node (NSIN).

As illustrated in Figure 3, in some embodiments, the first node 10 may optionally comprise a memory 14. The memory 14 of the first node 10 can comprise a volatile memory or a non-volatile memory. In some embodiments, the memory 14 of the first node 10 may comprise a non-transitory media. Examples of the memory 14 of the first node 10 include, but are not limited to, a random access memory (RAM), a read only memory (ROM), a mass storage media such as a hard disk, a removable storage media such as a compact disk (CD) or a digital video disk (DVD), and/or any other memory.

The processing circuitry 12 of the first node 10 can be connected to the memory 14 of the first node 10. In some embodiments, the memory 14 of the first node 10 may be for storing program code or instructions which, when executed by the processing circuitry 12 of the first node 10, cause the first node 10 to operate in the manner described herein in respect of the first node 10. For example, in some embodiments, the memory 14 of the first node 10 may be configured to store program code or instructions that can be executed by the processing circuitry 12 of the first node 10 to cause the first node 10 to operate in accordance with the method described herein in respect of the first node 10. Alternatively or in addition, the memory 14 of the first node 10 can be configured to store any information, data, messages, requests, responses, indications, notifications, signals, or similar, that are described herein. The processing circuitry 12 of the first node 10 may be configured to control the memory 14 of the first node 10 to store information, data, messages, requests, responses, indications, notifications, signals, or similar, that are described herein.

In some embodiments, as illustrated in Figure 3, the first node 10 may optionally comprise a communications interface 16. The communications interface 16 of the first node 10 can be connected to the processing circuitry 12 of the first node 10 and/or the memory 14 of first node 10. The communications interface 16 of the first node 10 may be operable to allow the processing circuitry 12 of the first node 10 to communicate with the memory 14 of the first node 10 and/or vice versa. Similarly, the communications interface 16 of the first node 10 may be operable to allow the processing circuitry 12 of the first node 10 to communicate with the second node, a third node, a fourth node, and/or any other node. The communications interface 16 of the first node 10 can be configured to transmit and/or receive information, data, messages, requests, responses, indications, notifications, signals, or similar, that are described herein. In some embodiments, the processing circuitry 12 of the first node 10 may be configured to control the communications interface 16 of the first node 10 to transmit and/or receive information, data, messages, requests, responses, indications, notifications, signals, or similar, that are described herein.

Although the first node 10 is illustrated in Figure 3 as comprising a single memory 14, it will be appreciated that the first node 10 may comprise at least one memory (i.e. a single memory or a plurality of memories) 14 that operate in the manner described herein. Similarly, although the first node 10 is illustrated in Figure 3 as comprising a single communications interface 16, it will be appreciated that the first node 10 may comprise at least one communications interface (i.e. a single communications interface or a plurality of communications interface) 16 that operate in the manner described herein. It will also be appreciated that Figure 3 only shows the components required to illustrate an embodiment of the first node 10 and, in practical implementations, the first node 10 may comprise additional or alternative components to those shown.

**Figure 4** is a flowchart illustrating a method performed by a first node 10 in accordance with an embodiment. The method is for managing services in a network. The first node 10 described earlier with reference to Figure 3 is configured to operate in accordance with the method of Figure 4. The method can be performed by or under the control of the processing circuitry 12 of the first node 10.

As illustrated at block 100 of Figure 4, in response to receiving a service for a user equipment (UE) from at least one second node that is incapable of handling network slices for providing the service, the service is assigned to one of a plurality of network slices in the network based on a quality of service (QoS) indicator assigned to the service.

In some embodiments, the QoS indicator may be assigned to the service by a third node. The third node can be connectable to the at least one second node via the first node. In some embodiments, the third node may be connectable to the at least one second node via the first node 10 by a network slice provisioned, by a fourth node, to be dedicated to the at least one second node.

In some embodiments, assigning the service to one of a plurality of network slices in the network may be performed in response to receiving the QoS indicator assigned to the service. In some embodiments, the QoS indicator may be unique to the service. In some embodiments, the QoS indicator can be based on one or more parameters, such as a first parameter indicative of a priority of the network slice to which the service is assigned relative to one or more other network slices and/or a second parameter indicative of a QoS for the service in the network slice. In some embodiments, the first parameter and/or second parameter may be predefined in the network.

Although not illustrated in Figure 4, in some embodiments, the method performed by the first node 10 may comprise, (e.g. continuously or periodically) checking for the at least one second node. More specifically, the processing circuitry 12 of the first node 10 may be configured to (e.g. continuously or periodically) check for the at least one second node according to some embodiments.

Although also not illustrated in Figure 4, in some embodiments, the method performed by the first node 10 may comprise initiating transmission of a request to a fourth node for the fourth node to provision a network slice dedicated to the at least one second node. More specifically, the processing circuitry 12 of the first node 10 may be configured to initiate transmission of a request to a fourth node for the fourth node to provision a network slice dedicated to the at least one second node. Herein, the term "initiate" can mean, for example, cause or establish. Thus, the processing circuitry 12 of the first node 10 can be configured to itself transmit this request to the fourth node (e.g. via a communications interface 16 of the first node 10) or can be configured to cause another node to transmit this request to the fourth node.

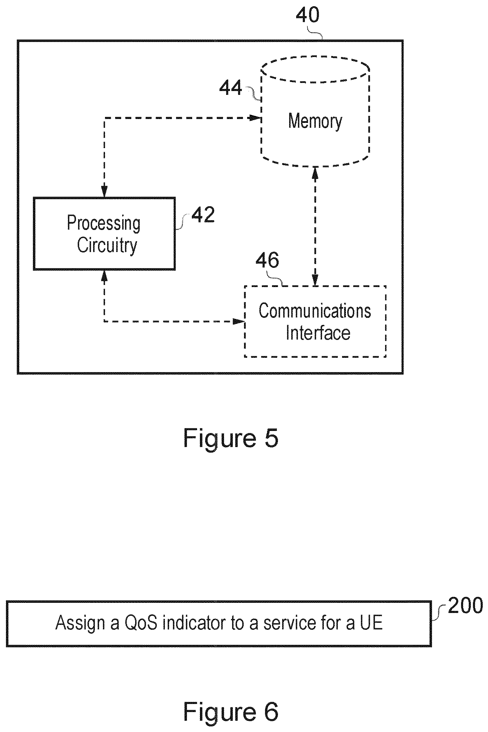

**Figure 5** illustrates a third node 40 in accordance with an embodiment. The third node 40 is for managing services in a network. The third node 40 may, for example, be a physical machine (e.g. a server) or a virtual machine (VM). In some embodiments, the third node 40 may be a network function node, such as, but not limited to, an access and mobility management function (AMF) node, a session management function (SMF) node or a user plane function (UPF) node. In some embodiments, the third node 40 may be a network orchestrator (e.g. an end-to-end network slice orchestrator).

As illustrated in Figure 5, the third node 40 comprises processing circuitry (or logic) 42. The processing circuitry 42 controls the operation of the third node 40 and can implement the method described herein in respect of the third node 40. The processing circuitry 42 can be configured or programmed to control the third node 40 in the manner described herein. The processing circuitry 42 can comprise one or more hardware components, such as one or more processors, one or more processing units, one or more multi-core processors, and/or one or more modules. In particular implementations, each of the one or more hardware components can be configured to perform, or is for performing, individual or multiple steps of the method described herein in respect of the third node 40. In some embodiments, the processing circuitry 42 can be configured to run software to perform the method described herein in respect of the third node 40. The software may be containerised according to some embodiments. Thus, in some embodiments, the processing circuitry 42 may be configured to run a container to perform the method described herein in respect of the third node 40.

Briefly, the processing circuitry 42 of the third node 40 is configured to assign a QoS indicator to a service for a UE. The service is from at least one second node that is incapable of handling network slices for providing the service.

As illustrated in Figure 5, in some embodiments, the third node 40 may optionally comprise a memory 44. The memory 44 of the third node 40 can comprise a volatile memory or a non-volatile memory. In some embodiments, the memory 44 of the third node 40 may comprise a non-transitory media. Examples of the memory 44 of the third node 40 include, but are not limited to, a random access memory (RAM), a read only memory (ROM), a mass storage media such as a hard disk, a removable storage media such as a compact disk (CD) or a digital video disk (DVD), and/or any other memory.

The processing circuitry 42 of the third node 40 can be connected to the memory 44 of the third node 40. In some embodiments, the memory 44 of the third node 40 may be for storing program code or instructions which, when executed by the processing circuitry 42 of the third node 40, cause the third node 40 to operate in the manner described herein in respect of the third node 40. For example, in some embodiments, the memory 44 of the third node 40 may be configured to store program code or instructions that can be executed by the processing circuitry 42 of the third node 40 to cause the third node 40 to operate in accordance with the method described herein in respect of the third node 40. Alternatively or in addition, the memory 44 of the third node 40 can be configured to store any information, data, messages, requests, responses, indications, notifications, signals, or similar, that are described herein. The processing circuitry 42 of the third node 40 may be configured to control the memory 44 of the third node 40 to store information, data, messages, requests, responses, indications, notifications, signals, or similar, that are described herein.

In some embodiments, as illustrated in Figure 5, the third node 40 may optionally comprise a communications interface 46. The communications interface 46 of the third node 40 can be connected to the processing circuitry 42 of the third node 40 and/or the memory 44 of third node 40. The communications interface 46 of the third node 40 may be operable to allow the processing circuitry 42 of the third node 40 to communicate with the memory 44 of the third node 40 and/or vice versa. Similarly, the communications interface 46 of the third node 40 may be operable to allow the processing circuitry 42 of the third node 40 to communicate with the first node 10, the second node, a fourth node, and/or any other node. The communications interface 46 of the third node 40 can be configured to transmit and/or receive information, data, messages, requests, responses, indications, notifications, signals, or similar, that are described herein. In some embodiments, the processing circuitry 42 of the third node 40 may be configured to control the communications interface 46 of the third node 40 to transmit and/or receive information, data, messages, requests, responses, indications, notifications, signals, or similar, that are described herein.

Although the third node 40 is illustrated in Figure 5 as comprising a single memory 44, it will be appreciated that the third node 40 may comprise at least one memory (i.e. a single memory or a plurality of memories) 44 that operate in the manner described herein. Similarly, although the third node 40 is illustrated in Figure 5 as comprising a single communications interface 46, it will be appreciated that the third node 40 may comprise at least one communications interface (i.e. a single communications interface or a plurality of communications interface) 46 that operate in the manner described herein. It will also be appreciated that Figure 5 only shows the components required to illustrate an embodiment of the third node 40 and, in practical implementations, the third node 40 may comprise additional or alternative components to those shown.

**Figure 6** is a flowchart illustrating a method performed by a third node 40 in accordance with an embodiment. The method is for managing services in a network. The third node 40 described earlier with reference to Figure 5 is configured to operate in accordance with the method of Figure 6. The method can be performed by or under the control of the processing circuitry 42 of the third node 40.

As illustrated at block 200 of Figure 6, a QoS indicator is assigned to a service for a UE. More specifically, the processing circuitry 42 of the third node 40 assigns the QoS indicator to a service for a UE according to some embodiments. The service is from at least one second node that is incapable of handling network slices for providing the service. There is thus provided a process to assign QoS indicators to services coming from the UEs connected to the at least one second node. The QoS indicator can be used to differentiate the service from other services in terms of QoS. Since the at least one second node is not network slice capable, network slicing priority-based differentiation cannot be performed and so QoS differentiation is utilised instead.

Although not illustrated in Figure 6, in some embodiments, the method performed by the third node 40 may comprise initiating transmission of the QoS indicator assigned to the service towards a first node 10 for the first node 10 to assign the service to one of a plurality of network slices in the network based on the QoS indicator. More specifically, the processing circuitry 42 of the third node 40 can be configured to initiate transmission of (e.g. itself transmit, such as via a communications interface 46 of the third node 40, or cause another node to transmit) the QoS indicator assigned to the service towards a first node 10. In some embodiments, the third node 40 may be connectable to the at least one second node via the first node 10.

In some embodiments, transmission of the QoS indicator may be initiated via a network slice that is provisioned, by a fourth node, to be dedicated to the at least one second node. In some embodiments, the third node 40 may be connectable to the at least one second node via the first node 10 by the network slice provisioned by the fourth node.

There may be two main reasons for assigning the QoS indicator to a service in a network slice that is provisioned to be dedicated to the at least one second node. Firstly, the at least one second node cannot create a network slice and thus it is not aware of the priority status of network slices. As a result, the at least one second node is not aware of which services will be prioritised because it does not have information about the network slice priority. For this reason, a QoS indicator is assigned to the service within the network slice provisioned for the at least one second node, e.g. in order to maintain the priority of the service at the level of the at least one second node. In this way, a prioritisation and differentiation can be achieved by using QoS indicators for UE services of the at least one second node, even though the at least one second node is unable to create network slices. Another reason for assigning the QoS indicator to a service in a network slice that is provisioned to be dedicated to the at least one second node is to provide a differentiation for the UE services from/to NSINs. In particular, the QoS differentiated services can be assigned (e.g. mapped) to network slices by the first node 10 checking the QoS indicator assigned to those services.

In some embodiments, the QoS indicator may be unique to the service. In some embodiments, the QoS indicator may be based on one or more parameters, such as a first parameter indicative of a priority of a network slice to which the service is assigned relative to one or more other network slices and/or a second parameter indicative of a QoS for the service in the network slice. In some embodiments, the first parameter and/or second parameter may be predefined in the network.

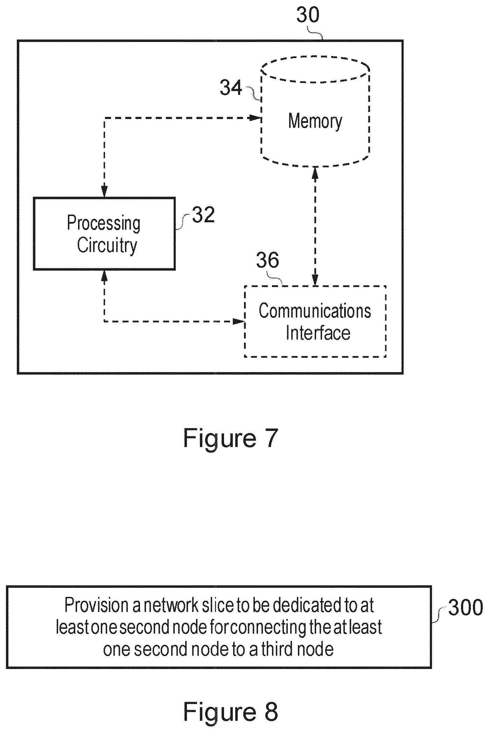

**Figure 7** illustrates a fourth node 30 in accordance with an embodiment. The fourth node 30 is for provisioning network slices in a network. The fourth node 30 may, for example, be a physical machine (e.g. a server) or a virtual machine (VM). In some embodiments, the fourth node 30 may be an orchestrator, such as a slice orchestrator or, more specifically, an end-to-end (E2E) slice orchestrator.

As illustrated in Figure 7, the fourth node 30 comprises processing circuitry (or logic) 32. The processing circuitry 32 controls the operation of the fourth node 30 and can implement the method described herein in respect of the fourth node 30. The processing circuitry 32 can be configured or programmed to control the fourth node 30 in the manner described herein. The processing circuitry 32 can comprise one or more hardware components, such as one or more processors, one or more processing units, one or more multi-core processors, and/or one or more modules. In particular implementations, each of the one or more hardware components can be configured to perform, or is for performing, individual or multiple steps of the method described herein in respect of the fourth node 30. In some embodiments, the processing circuitry 32 can be configured to run software to perform the method described herein in respect of the fourth node 30. The software may be containerised according to some embodiments. Thus, in some embodiments, the processing circuitry 32 may be configured to run a container to perform the method described herein in respect of the fourth node 30.

Briefly, the processing circuitry 32 of the fourth node 30 is configured to, in response to detection of at least one second node that is incapable of handling network slices for providing a service for a UE from the at least one second node, provision a network slice to be dedicated to the at least one second node to a third node 40 for the third node 40 to assign a QoS indicator to the service.

As illustrated in Figure 7, in some embodiments, the fourth node 30 may optionally comprise a memory 34. The memory 34 of the fourth node 30 can comprise a volatile memory or a non-volatile memory. In some embodiments, the memory 34 of the fourth node 30 may comprise a non-transitory media. Examples of the memory 34 of the fourth node 30 include, but are not limited to, a random access memory (RAM), a read only memory (ROM), a mass storage media such as a hard disk, a removable storage media such as a compact disk (CD) or a digital video disk (DVD), and/or any other memory.

The processing circuitry 32 of the fourth node 30 can be connected to the memory 34 of the fourth node 30. In some embodiments, the memory 34 of the fourth node 30 may be for storing program code or instructions which, when executed by the processing circuitry 32 of the fourth node 30, cause the fourth node 30 to operate in a manner described herein in respect of the fourth node 30. For example, in some embodiments, the memory 34 of the fourth node 30 may be configured to store program code or instructions that can be executed by the processing circuitry 32 of the fourth node 30 to cause the fourth node 30 to operate in accordance with the method described herein in respect of the fourth node 30. Alternatively or in addition, the memory 34 of the fourth node 30 can be configured to store any information, data, messages, requests, responses, indications, notifications, signals, or similar, that are described herein. The processing circuitry 32 of the fourth node 30 may be configured to control the memory 34 of the fourth node 30 to store information, data, messages, requests, responses, indications, notifications, signals, or similar, that are described herein.

In some embodiments, as illustrated in Figure 7, the fourth node 30 may optionally comprise a communications interface 36. The communications interface 36 of the fourth node 30 can be connected to the processing circuitry 32 of the fourth node 30 and/or the memory 34 of the fourth node 30. The communications interface 36 of the fourth node 30 may be operable to allow the processing circuitry 32 of the fourth node 30 to communicate with the memory 34 of the fourth node 30 and/or vice versa. Similarly, the communications interface 36 of the fourth node 30 may be operable to allow the processing circuitry 32 of the fourth node 30 to communicate with the first node 10, the second node, the third node 40 and/or any other node. The communications interface 36 of the fourth node 30 can be configured to transmit and/or receive information, data, messages, requests, responses, indications, notifications, signals, or similar, that are described herein. In some embodiments, the processing circuitry 32 of the fourth node 30 may be configured to control the communications interface 36 of the fourth node 30 to transmit and/or receive information, data, messages, requests, responses, indications, notifications, signals, or similar, that are described herein.

Although the fourth node 30 is illustrated in Figure 7 as comprising a single memory 34, it will be appreciated that the fourth node 30 may comprise at least one memory (i.e. a single memory or a plurality of memories) 34 that operate in the manner described herein. Similarly, although the fourth node 30 is illustrated in Figure 7 as comprising a single communications interface 36, it will be appreciated that the fourth node 30 may comprise at least one communications interface (i.e. a single communications interface or a plurality of communications interface) 36 that operate in the manner described herein. It will also be appreciated that Figure 7 only shows the components required to illustrate an embodiment of the fourth node 30 and, in practical implementations, the fourth node 30 may comprise additional or alternative components to those shown.

**Figure 8** is a flowchart illustrating a method performed by a fourth node 30 in accordance with an embodiment. The method is for provisioning network slices in a network. The fourth node 30 described earlier with reference to Figure 7 is configured to operate in accordance with the method of Figure 8. The method can be performed by or under the control of the processing circuitry 32 of the fourth node 30.

As illustrated at block 300 of Figure 8, in response to detection of at least one second node that is incapable of handling network slices for providing a service for a UE from the at least one second node, a network slice is provisioned to be dedicated to the at least one second node for connecting the at least one second node to a third node 40 for the third node 40 to assign a QoS indicator to the service. More specifically, the processing circuitry 32 of the fourth node 30 provisions such a network slice.

In some embodiments, connecting the at least one second node to the third node 40 may be via a first node 10 for the first node 10 to assign the service to one of a plurality of network slices in the network based on the QoS indicator assigned to the service.

In some embodiments, the method performed by the fourth node 30 may comprise creating a network slice dedicated to the at least one second node to provision the network slice (e.g. defining a new network slice for connecting a UE from the at least one second node) or dedicating an existing network slice to the at least one second node to provision the network slice. More specifically, the processing circuitry 32 of the fourth node 30 may be configured to provision the network slice in either of these ways. In some embodiments, provisioning the network slice may be performed in response to a request for the fourth node 30 to provision the network slice to be dedicated to the at least one second node.

There is also provided a system. The system is for managing services in a network and/or provisioning network slices in the network. The system can comprise one or more first nodes 10 as described herein, one or more second nodes as described herein, one or more third nodes 40 as described herein and/or one or more fourth nodes 30 as described herein. A method performed by the system can thus comprise the method described herein in respect of the first node 10, the method described herein in respect of the second node, the method described herein in respect of the third node 40 and/or the method described herein in respect of the fourth node 30.

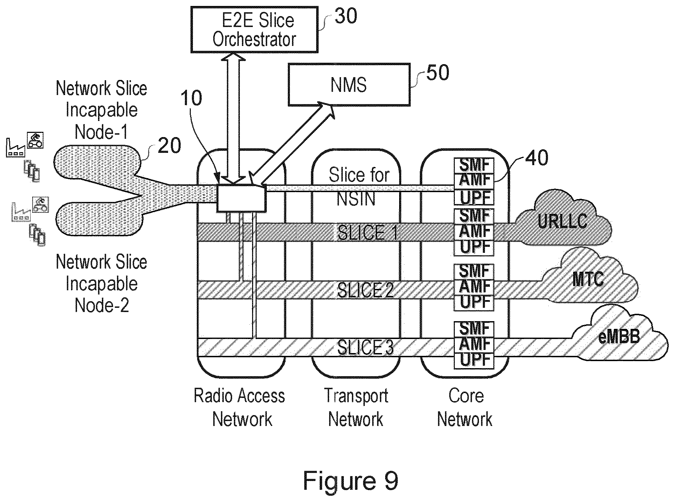

**Figure 9** is a block diagram illustrating a system in accordance with an embodiment. The system illustrated in Figure 9 comprises a first node 10 as described earlier, at least one second node (e.g. network slice incapable node-1 and/or network slice incapable node-2) 20 as described earlier, at least one third node (e.g. an AMF, SMF and/or UPF) 40 as described earlier, and a fourth node (e.g. E2E slice orchestrator) 30 as described earlier. The at least one second node 20 can communicate with one or more UEs, which are illustrated to the left of the at least one second node 20 in Figure 9. The UEs may be connected to at least one second node 20.

The system illustrated in Figure 9 comprises a fifth node (e.g. a node of a network management system, NMS) 50. In some embodiments, the fifth node 50 may be configured to implement software. The software may, for example, be responsible for management of any one or more of the other nodes referred to herein. In some embodiments, the fifth node 50 may be configured to store (e.g. detailed) information about any one or more of the other nodes referred to herein. This information may, for example, comprise information about (e.g. the capabilities of) one or more of the other nodes referred to herein.

The system illustrated in Figure 9 also comprises a network. The network is sliced into a plurality of network slices. In the embodiment illustrated in Figure 9, the network is sliced vertically. However, it will be understood that the network may instead be sliced horizontally according to other embodiments. Also, although the network is illustrated in Figure 9 as comprising three network slices, it will be understood that the network referred to herein may comprise any other number of network slices. In the vertical slicing embodiment illustrated in Figure 9, a first network slice ("Slice 1") is dedicated to a first service (e.g. an ultra-reliable low-latency communication, URLLC, service), a second network slice ("Slice 2") is dedicated to a second service (e.g. a machine-type-communication, MTC, service), and a third network slice ("Slice 3") is dedicated to a third service (e.g. an enhanced mobile broadband, eMBB, service). In an alternative horizontal slicing embodiment (which is not illustrated), the first network slice ("Slice 1") may be dedicated to a first service provider, the second network slice ("Slice 2") may be dedicated to a second service provider, and the third network slice ("Slice 3") may be dedicated to a third service provider.

In the embodiment illustrated in Figure 9, the network comprises a fourth network slice ("Slice for NSIN") dedicated to the at least one second node 20 for connecting the at least one second node 20 to the at least one third node 40 for the at least one third node 40 to assign a QoS indicator to one or more of the services in the manner described herein. In other embodiments (e.g. where the fourth node 30 assigns a QoS indicator to one or more of the services in the manner described herein), the fourth network slice may not be present.

As illustrated in Figure 9, in some embodiments, the network may comprise a radio access network (RAN), a transport network, and a core network. In some of these embodiments, the RAN may comprise the first node 10 referred to herein. Thus, in some embodiments, the first node 10 referred to herein may be a RAN node. As illustrated in Figure 9, in some embodiments, the core network may comprise the at least one third node 40.

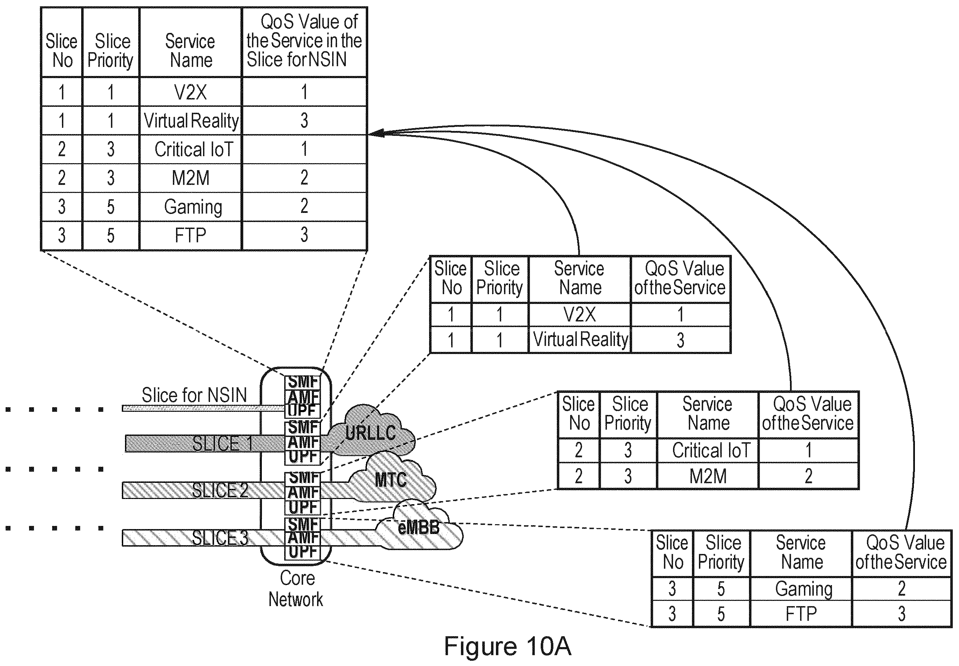

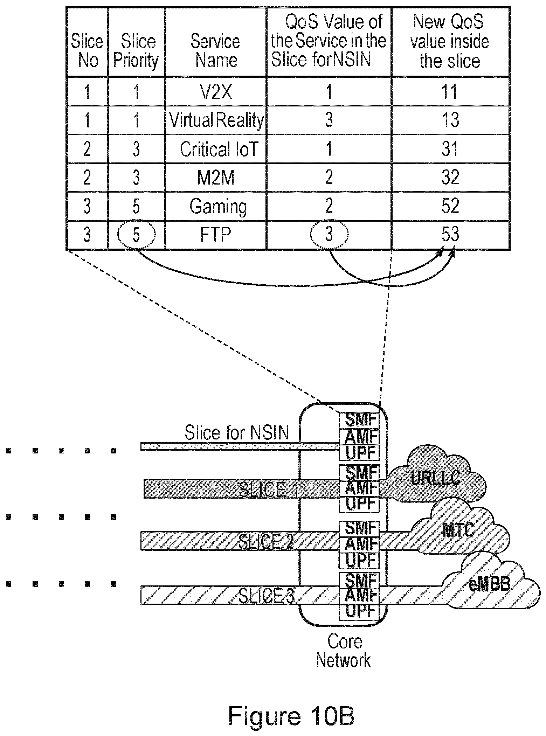

**Figures 10A** **and** **10B** are block diagrams illustrating a system in operation according to an embodiment. The system illustrated in Figures 10A and 10B may be as described earlier with reference to Figure 9.

As described earlier, QoS indicators are assigned to services by the third node 40 described herein or the fourth node 30 described herein. The services are for UEs from at least one second node 20 that is incapable of handling network slices for providing the service. Figures 10A and 10B illustrate such a method being performed in the system. In the embodiments illustrated in Figures 10A and 10B, the third node 40 (e.g. a network function node, such as an AMF, SMF, or UPF) assigns the QoS indicator to the service. As illustrated in Figure 10A, in some embodiments, the third node 40 (or, more specifically, the processing circuitry 42 of the third node 40) may collect one or more parameters from the network and these one or more parameters may be used to assign the QoS indicators to the services.

In some embodiments, as illustrated in Figure 10A the one or more parameters may be predefined in the network. For example, one or more providers of the services can define the one or more parameters at one or more respective network function nodes (e.g. one or more SMFs, one or more AMFs, and/or one or more UPFs) of the network. The third node 40 (or, more specifically, the processing circuitry 42 of the third node 40) may thus collect the one or more parameters from the one or more network function nodes of the network according to some embodiments.

In some embodiments, as illustrated in Figure 10A, for each service, the one or more parameters may comprise a first parameter indicative of a priority of the network slice to which the service is assigned relative to one or more other network slices ("Slice Priority"), a second parameter indicative of a QoS for the service in the network slice ("QoS Value of the Service"), information identifying the network slice to which the service is assigned such as a network slice number ("Slice No"), and/or information identifying the service such as a service name ("Service Name"). The one or more parameters from each network function node of the network may be in the form of a table according to some embodiments.

As illustrated in Figure 10A, the one or more parameters collected by the third node 40 may be collated by the third node 40 (or, more specifically, the processing circuitry 42 of the third node 40). For example, in some embodiments, the third node 40 (or, more specifically, the processing circuitry 42 of the third node 40) may collate the one or more parameters into a single table as illustrated in Figure 10A. Thus, a mapping table may be designed for the services according to some embodiments. The mapping table may be inside (e.g. stored in a memory 44 of) the third node 40 according to some embodiments.

As illustrated in Figure 10B, the third node 40 (or, more specifically, the processing circuitry 42 of the third node 40) assigns QoS indicators to services. In embodiments involving a mapping table, the mapping table may be used to assign QoS indicators to services. In some embodiments, as illustrated in Figure 10B, the QoS indicator assigned to a service may be a new (or original) parameter indicative of a QoS for the service in the network slice, such as a QoS value for the service in the network slice ("New QoS value inside the slice"). The new parameter is a parameter that is different to the collected parameter(s). In some embodiments, as illustrated in Figure 10B, the QoS indicator assigned to the service may be based on a first parameter indicative of a priority of the network slice to which the service is assigned relative to one or more other network slices and/or a second parameter indicative of the QoS for the service in the network slice. For example, the QoS indicator assigned to the service may comprise the first parameter and the second parameter. That is, in some embodiments, the first parameter and the second parameter may be combined to create the QoS indicator. In an embodiment such as that illustrated in Figure 10B, where the first and second parameters are each single digit values, the QoS indicator assigned to the service may comprise a two-digit value.

As illustrated in Figure 10B, the QoS indicator assigned to the service is different. That is, no two services are assigned the same QoS indicator. The QoS indicators are thus unique to the service to which they are assigned. The first node 10 can acquire the QoS indicator (e.g. the mapping table comprising the QoS indicator) from the third node 40 in the embodiment illustrated in Figures 10A and 10B. In other embodiments, the fourth node (e.g. an orchestrator) 30 may collect the priority values of existing network slices and the QoS indicators assigned to the services inside these network slices. In some of these embodiments, when creating a (new) network slice for the at least one NSIN, the fourth node 30 may pass this information to the network function node (e.g. AMF, SMF, UPF) of the newly created network slice.

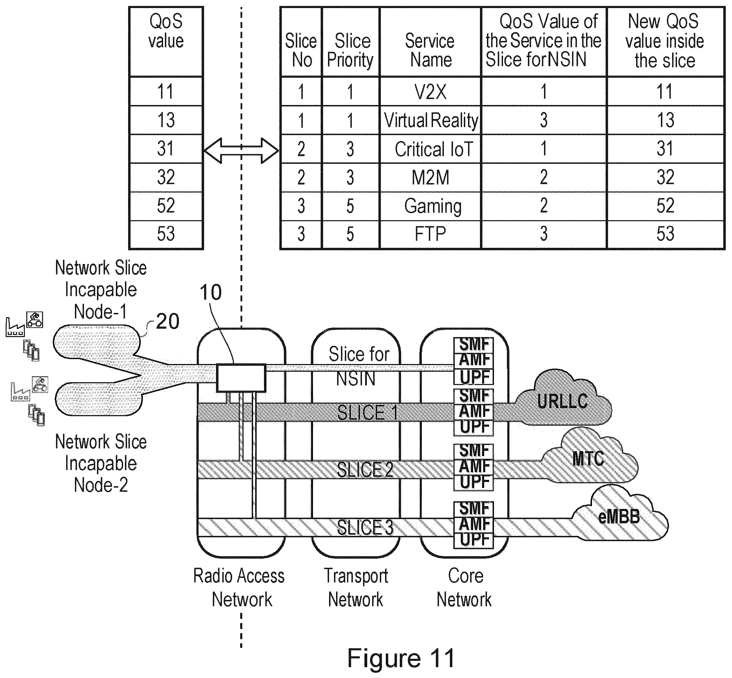

Figure **11** is a block diagram illustrating a system in operation according to an embodiment. The system illustrated in Figure 11 may be as described earlier with reference to Figures 9, 10A and 10B. More specifically, Figure 11 illustrates the QoS indicators assigned to the respective services, which can each be used to assign the respective service to one of the plurality of network slices in the network.

As illustrated in Figure 11, the QoS indicators assigned to the respective services can be made available to the first node 10, such that the first node 10 can assign each service to an appropriate network slice in the network based on the respective QoS indicator. In embodiments involving a mapping table, the mapping table can be used by the first node 10 to assign the services to network slices. For example, QoS differentiation can be used to assign (e.g. map) services to network slices. That is, a service may be assigned (e.g. mapped) to a network slice by checking the QoS indicator assigned to that service. After the QoS indicator assigned to the service has been identified, the first node 10 (or, more specifically, the processing circuitry 12 of the first node 10) can move the service to the corresponding network slice.

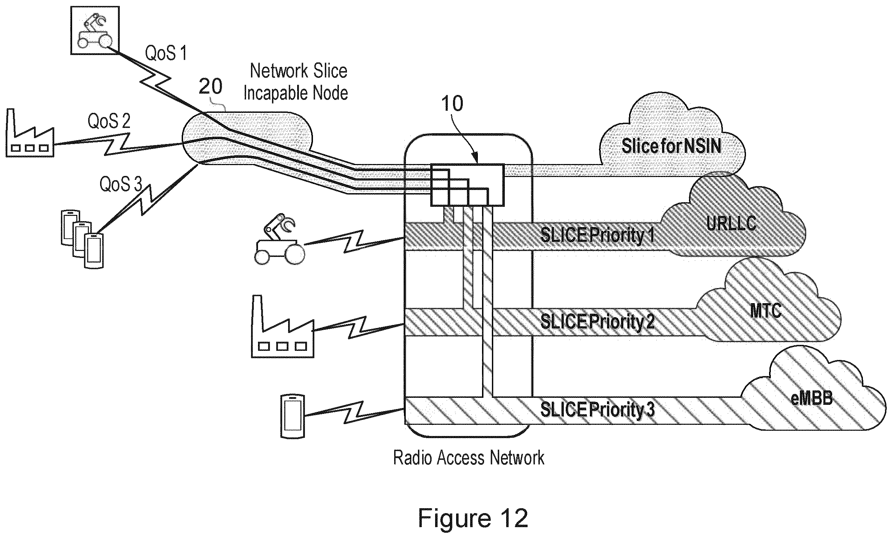

**Figure 12** is a block diagram illustrating a system according to an embodiment. More specifically, Figure 12 illustrates the assignment of services to network slices in the network based on the respective QoS indicators assigned to those services, in accordance with an embodiment. The system illustrated in Figure 12 may be as described earlier with reference to Figures 9, 10A and 10B. As illustrated in Figure 12, in response to receiving a service for a UE from at least one second node 20 that is incapable of handling network slices for providing the service, the first node 10 (or, more specifically, the processing circuitry 12 of the first node 10) assigns the service to one of the plurality of network slices in the network based on the QoS indicator assigned to the service. The QoS indicator can provide a differentiation for the UE service flows from the at least one second node 20.

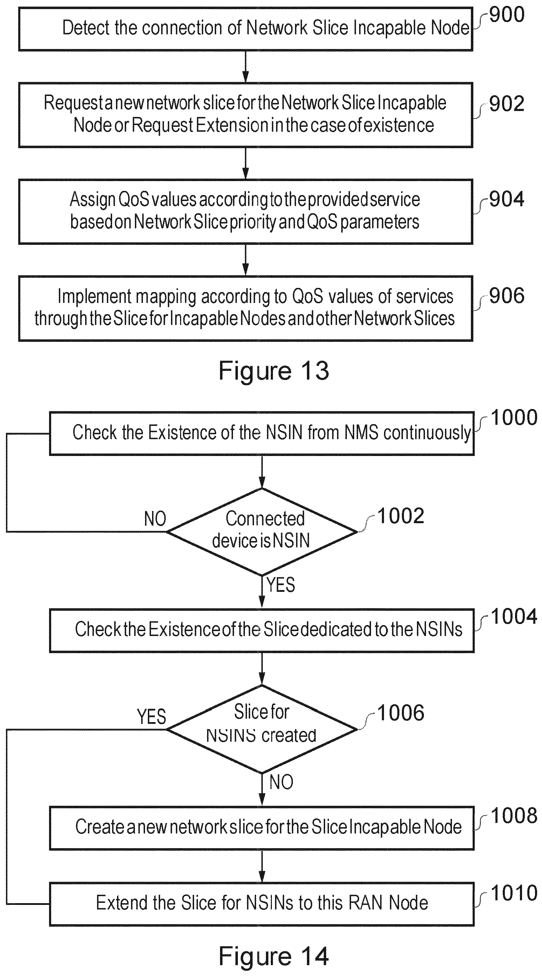

**Figure 13** is a flowchart illustrating a method according to an embodiment. More specifically, Figure 13 illustrates the management of services in a network in accordance with an embodiment.

In some embodiments, as illustrated at block 900 of Figure 13, the first node 10 (or, more specifically, the processing circuitry 12 of the first node 10) is configured to detect at least one second node 20 that is incapable of handling network slices for providing a service for a UE from the at least one second node 20. The at least one second node 20 that is incapable of handling network slices will be referred to as at least one network slice incapable node (NSIN) 20. In some embodiments, the detection of at least one NSIN 20 may comprise detecting a connection of the at least one NSIN 20 in the network. In some embodiments, the first node 10 can detect the at least one NSIN 20 by (e.g. continuously or periodically) checking for the at least one NSIN 20. In some embodiments, the first node 10 may perform the check with the fifth node (e.g. NMS) 50. Alternatively or in addition, in some embodiments the first node 10 can detect the at least one NSIN 20 by checking with an inventory server. For example, the first node 10 may interact with the inventory server to obtain information about the existence of at least one NSIN 20. The inventory server may be part of the infrastructure of a mobile network operator (MNO) according to some embodiments. Alternatively or in addition, in some embodiments, when the at least one NSIN 20 is initially deployed (e.g. for the first time) in the network, the fifth node 50 may transmit information related to the at least one NSIN 20 deployment (such as activation information for the NSIN 20) to the first node 10. Since all nodes in an MNO infrastructure have a connection to the NMS, the communication between the first node 10 and the NMS does not require a new specialized connection type. In some embodiments, the existence of the at least one NSIN 20 can be informed (e.g. directly) to the first node 10 by the NMS. Additionally the first node 10 is (e.g. manually) configured to itself detect the at least one NSIN 20.

In some embodiments, as illustrated at block 902 of Figure 13, the first node 10 (or, more specifically, the processing circuitry 12 of the first node 10) may initiate transmission of (e.g. itself transmit or cause another node to transmit) a request to provision a network slice dedicated to the at least one NSIN 20. In some embodiments, the transmission of the request can be towards the fourth node (e.g. an orchestrator, such as an E2E network slice orchestrator) 30 referred to herein. The fourth node 30 (or, more specifically, the processing circuitry 32 of the fourth node 30) provisions a network slice to be dedicated to the at least one NSIN 20 for connecting the at least one NSIN 20 to a third node 40 for the third node 40 to assign a QoS indicator to a service. In some embodiments, provisioning the network slice to be dedicated to the at least one NSIN 20 may comprise creating a (new) network slice dedicated to the at least one NSIN 20. In other embodiments, provisioning the network slice to be dedicated to the at least one NSIN 20 may comprise dedicating an existing slice to the at least one NSIN 20.

In some embodiments, as illustrated at block 904 of Figure 13, the third node 40 (or, more specifically, the processing circuitry 42 of the third node 40) assigns a QoS indicator to a service for a UE in the manner described earlier. The service is from at least one NSIN 20. Assigning a QoS indicator in this way can provide a means to assign the service to the most suitable network slice in the network, such as a first network slice for a first service (e.g. an eMBB service) or first service provider, a second network slice for a second service (e.g. a MTC service) or second service provider, a third network slice for a third service (e.g. URLLC service) or service provider, etc.

In some embodiments, as illustrated at block 906 of Figure 13, the first node 10 (or, more specifically, the processing circuitry 12 of the first node 10) assigns the service to one of the plurality of network slices in the network based on the QoS indicator assigned to the service in the manner described earlier. In more detail, the first node 10 (or, more specifically, the processing circuitry 12 of the first node 10) assigns (e.g. maps) the traffic from/to the at least one NSIN 20 to/from the corresponding network slices. There may be three options for the assignment (e.g. mapping) process. In some embodiments, assigning the service to a network slice can be performed for a user plane (UP) only. In some embodiments, assigning the service to a network slice can be performed for both the UP and a control plane (CP). In some embodiments, an MNO may disable the assignment (e.g. mapping) so that all the UP and CP traffic is transmitted via the network slice dedicated to the at least one second node 20. After initial CP signalling to the third node 40 is established and the related QoS indicator is obtained, there is no more need to continue this session. Moreover, both AMF and SMF transfer can be performed between network slices if necessary.

**Figure 14** is a flowchart illustrating a method according to an embodiment. More specifically, Figure 14 illustrates the provisioning of a network slice in a network.

In some embodiments, as illustrated at block 1000 of Figure 14, the first node 10 (or, more specifically, the processing circuitry 12 of the first node 10) may check for at least one second node 20 that is incapable of handling network slices, or for the existence of at least one second node 20 that is incapable of handling network slices. The at least one second node 20 that is incapable of handling network slices will be referred to as at least one network slice incapable node (NSIN) 20. The check for at least one NSIN 20 may be performed continuously or periodically. In some embodiments, the first node 10 (or, more specifically, the processing circuitry 12 of the first node 10) may check for the at least one NSIN 20 with a fifth node (e.g. an NMS) 50 of the network.

In some embodiments, as illustrated at block 1002 of Figure 14, if there is no NSIN 20 detected, the step of checking at block 1000 of Figure 14 continues. On the other hand, if at least one NSIN 20 is detected at block 1002 of Figure 14, the method proceeds to block 1004 of Figure 14. In some embodiments, at least one NSIN 20 may be detected where a connection of the at least one NSIN 20 to the network is detected. As illustrated at block 1004 of Figure 14, in some embodiments, the fourth node (e.g. an orchestrator) 30 (or, more specifically, the processing circuitry 34 of the fourth node 30) may check for a pre-existing network slice in the network, which can be dedicated to the at least one NSIN 20.

As illustrated at block 1006 of Figure 14, if there is not already a network slice created that can be dedicated to the at least one NSIN 20, the process moves to block 1008 of Figure 14. In some embodiments, as illustrated at block 1008 of Figure 14, if there is not already a network slice created that can be dedicated to the at least one NSIN 20, the fourth node 30 (or, more specifically, the processing circuitry 32 of the fourth node 30) may provision a network slice by creating a (new) network slice dedicated to the at least one NSIN 20. The first node 10 may interact with the fourth node 30 to create this network slice according to some embodiments.

On the other hand, as illustrated at block 1006 of Figure 14, if there is already a network slice created that can be dedicated to the at least one NSIN 20, the process moves to block 1010 of Figure 14. In some embodiments, as illustrated at block 1010 of Figure 14, if there is already a network slice created that can be dedicated to the at least one NSIN 20, the fourth node 30 (or, more specifically, the processing circuitry 32 of the fourth node 30) can provision a network slice by dedicating the existing (or previously created) network slice to the at least one NSIN 20. For example, the fourth node 30 (or, more specifically, the processing circuitry 32 of the fourth node 30) may extend the pre-existing (or previously created) network slice for it to be dedicated to the at least one NSIN 20. In some radio access network (RAN) embodiments, the pre-existing (or previously created) network slice may be extended to a RAN node of the network.

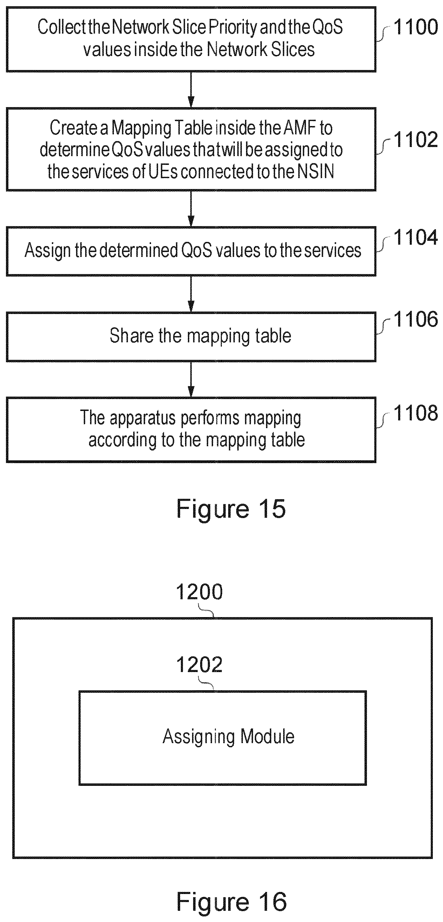

**Figure 15** is a flowchart illustrating a method according to an embodiment. More specifically, Figure 15 illustrates the assignment of a QoS indicator to a service for a UE, where the service is from at least one NSIN 20.

In some embodiments, as illustrated at block 1100 of Figure 15, the third node (e.g. a network function node, such as an AMF node, SMF node, or UPF node) 40 (or, more specifically, the processing circuitry 42 of the third node 40) may collect one or more parameters from the network and these one or more parameters may be used to assign a QoS indicator to a service. The one or more parameters may be as described earlier, e.g. with reference to Figure 10A. For example, in some embodiments, the one or more parameters may comprise a first parameter indicative of a priority of the network slice to which the service is assigned relative to one or more other network slices ("Slice Priority") and a second parameter indicative of a QoS for the service in the network slice ("QoS Value of the Service").

In some embodiments, as illustrated at block 1102 of Figure 15, the third node 40 (or, more specifically, the processing circuitry 42 of the third node 40) may collate the one or more collected parameters. For example, the one or more collected parameters may be collated into a mapping table, as described earlier. As illustrated at block 1104 of Figure 15, the third node 40 (or, more specifically the processing circuitry 42 of the third node 40) assigns a QoS indicator to the service for the UE from the at least one NSIN 20. The QoS indicator can be based on the one or more collected parameters. The QoS indicator may be assigned in the manner described earlier, e.g. with reference to Figure 10B

As illustrated at block 1106 of Figure 15, in some embodiments, the third node 40 (or more specifically, the processing circuitry 42 of the third node 40) may initiate transmission of (e.g. itself transmit via a communications interface 46 of the third node 40 or cause another node to transmit) the QoS indicator assigned to the service towards the first node 10 for the first node 10 to assign the service to one of a plurality of network slices in the network based on the QoS indicator. In some embodiments involving a mapping table, transmission of the QoS indicator may be initiated by initiating transmission of the mapping table. Thus, in some embodiments, the mapping table may be shared. In some embodiments, transmission of the QoS indicator may be initiated via a network slice that is provisioned, by the fourth node 30, to be dedicated to the at least one second node 20.

As illustrated at block 1108 of Figure 15, the first node 10 (or more specifically, the processing circuitry 12 of the first node 10) assigns the service to one of a plurality of network slices in the network based on the QoS indicator assigned to the service. For example, in embodiments involving a mapping table, the first node 10 (or more specifically, the processing circuitry 12 of the first node 10) may perform a mapping according to the mapping table to assign the QoS indicator assigned to the service.

In some embodiments, the method described herein may involve the separate management of services for the UEs that are in communication with, or connected, to at least one NSIN 20. The method may, for example, be capable of differentiating various services for the UEs by the assignment (e.g. mapping) of each of the services for each UE to a specific network slice in the manner described herein.

**Figure 16** is a block diagram illustrating a first node 1200 in accordance with an embodiment. The first node 1200 comprises an assigning module 1202 configured to, in response to receiving a service for a UE from at least one second node that is incapable of handling slices for providing the service, assigning the service to one of a plurality of network slices in the network based on a QoS indicator assigned to the service. The first node 1200 may operate in the manner described herein in respect of the first node.

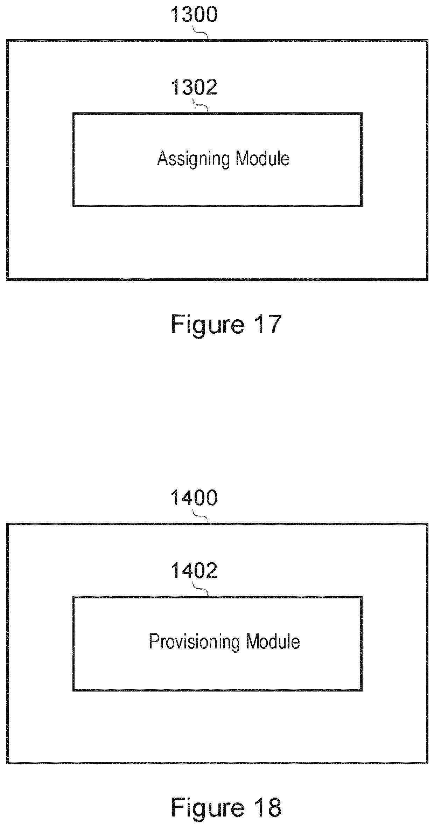

**Figure 17** is a block diagram illustrating a third node 1300 in accordance with an embodiment. The third node 1300 comprises an assigning module 1302 configured to assign a QoS indicator to a service for a UE, wherein the service is from at least one second node that is incapable of handling network slices for provisioning the service. The third node 1300 may operate in the manner described herein in respect of the third node.

**Figure 18** is a block diagram illustrating a fourth node 1400 in accordance with an embodiment. The fourth node 1400 comprises a provisioning module 1402 configured to, in response to detection of at least one second node that is incapable of handling network slices for providing a service for a UE from the at least one second node, provisioning a network slice to be dedicated to the at least one second node for connecting the at least one second node to a third node for the third node to assign a QoS indicator to the service. The fourth node 1400 may operate in the manner described herein in respect of the fourth node.

There is also provided a computer program comprising instructions which, when executed by processing circuitry (such as the processing circuitry 12 of the first node 10 described earlier, the processing circuitry 42 of the third node 40 described earlier, and/or the processing circuitry 32 of the fourth node 30 described earlier), cause the processing circuitry to perform at least part of the method described herein. There is provided a computer program product, embodied on a non-transitory machine-readable medium, comprising instructions which are executable by processing circuitry (such as the processing circuitry 12 of the first node 10 described earlier, the processing circuitry 42 of the third node 40 described earlier, and/or the processing circuitry 32 of the fourth node 30 described earlier) to cause the processing circuitry to perform at least part of the method described herein. There is provided a computer program product comprising a carrier containing instructions for causing processing circuitry (such as the processing circuitry 12 of the first node 10 described earlier, the processing circuitry 42 of the third node 40 described earlier, and/or the processing circuitry 32 of the fourth node 30 described earlier) to perform at least part of the method described herein. In some embodiments, the carrier can be any one of an electronic signal, an optical signal, an electromagnetic signal, an electrical signal, a radio signal, a microwave signal, or a computer-readable storage medium.

In some embodiments, the first node functionality, the third node functionality, and/or the fourth node functionality described herein can be performed by hardware. Thus, in some embodiments, any one or more of the first node 10, the third node 40, and the fourth node 30 described herein can be a hardware node. However, it will also be understood that optionally at least part or all of the first node functionality, the third node functionality, and/or the fourth node functionality described herein can be virtualized. For example, the functions performed by any one or more of the first node 10, the third node 40, and the fourth node 30 described herein can be implemented in software running on generic hardware that is configured to orchestrate the node functionality. Thus, in some embodiments, any one or more of the first node 10, the third node 40, and the fourth node 30 described herein can be a virtual node. In some embodiments, at least part or all of the first node functionality, the third node functionality, and/or the fourth node functionality described herein may be performed in a network enabled cloud. The first node functionality, the third node functionality, and/or the fourth node functionality described herein may all be at the same location or at least some of the node functionality may be distributed.

It will be understood that at least some or all of the method steps described herein can be automated in some embodiments. That is, in some embodiments, at least some or all of the method steps described herein can be performed automatically. The method described herein can be a computer-implemented method.

Thus, in the manner described herein, there is advantageously provided a technique for managing services in a network and/or provisioning network slices in a network. The technique can, for example, remove the issue which arises from network slice incapable nodes (NSINs) being unable to handle the services from a UE in a sliced network environment. In particular, the technique makes it possible to implement network slicing even when there are nodes that do not have the network slicing capability (e.g. Wi-Fi nodes that connect to a relay base station as a user). This allows services to benefit from network slices and be more effectively dealt with by operating in a sliced network environment. Network slicing can be extended to end points in the network. In this way, each UE can experience the benefits of network slicing. Mobile network operators (MNOs) can implement network slicing for UEs connected to the NSINs. The methods described herein can be applied to vertical and/or horizontal network slicing use cases that can, for example, be deployed in an MNO infrastructure.

In some embodiments, the frequency spectrum of an MNO can be enabled at different points according to network design plans. The methods described herein also work in this case and enable the transfer of UEs to the network, which will run on a network slice that cannot be enabled due to MNO network planning. Moreover, the methods described herein ensure that the requirement that each service must operate in a dedicated network slice can be met and eliminates a major management problem for MNOs. The methods described herein also eliminate the need for resources to be allocated separately in different parts of the network (e.g. in the radio access network (RAN), the transport network (TN), and the core network (CN)) for the UE services from the NSINs.

The methods described herein can be useful for handling the existence of at least one NSIN in a (e.g. dense) deployment of nodes in a network, such as a 5G network. The QoS assignment method described herein may be implemented for the services in the core network of the dedicated network slice for the at least one NSIN. This differentiated QoS assignment can be useful for the differentiation of the services from the UEs which are connected to the at least one NSIN.

The present invention is defined in the appended independent claims to which reference should be made. Advantageous features are set out in the appended dependent claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method performed by a first node (10) for managing services in a network, the method comprising:
in response to receiving a service for a user equipment, UE, from at least one second node (20) that is incapable of handling network slices for providing the service:
assigning (100) the service to one of a plurality of network slices in the network based on a quality of service, QoS, indicator assigned to the service, wherein the first node (10) is configured to itself detect the at least one second node (20) that is incapable of handling network slices and/or detect from another node the at least one second node (20) that is incapable of handling network slices.

2. A method as claimed in claim 1, wherein:
the QoS indicator is assigned to the service by a third node (30, 40) that is connectable to the at least one second node (20) via the first node (10).

3. A method as claimed in claim 2, wherein:
the third node (40) is connectable to the at least one second node (20) via the first node (10) by a network slice provisioned, by a fourth node (30), to be dedicated to the at least one second node (20).

4. A method as claimed in any of the preceding claims, wherein:
the QoS indicator is based on:
a first parameter indicative of a priority of the network slice to which the service is assigned relative to one or more other network slices; and/or
a second parameter indicative of a QoS for the service in the network slice.

5. A method as claimed in any of the preceding claims, the method comprising:
continuously or periodically checking for the at least one second node (20).

6. A method performed by a third node (30, 40) for managing services in a network, the method comprising:
assigning (200) a quality of service, QoS, indicator to a service for a user equipment, UE, wherein the service is from at least one second node (20) that is incapable of handling network slices for providing the service, wherein the third node (30, 40) is configured to itself detect the at least one second node (20) that is incapable of handling network slices and/or detect from another node the at least one second node (20) that is incapable of handling network slices.

7. A method as claimed in claim 6, the method comprising:
initiating transmission of the QoS indicator assigned to the service towards a first node (10) for the first node (10) to assign the service to one of a plurality of network slices in the network based on the QoS indicator.

8. A method as claimed in claim 7, wherein:
transmission of the QoS indicator is initiated via a network slice that is provisioned, by a fourth node (30), to be dedicated to the at least one second node (20).

9. A method as claimed in claim 8, wherein:
the third node (40) is connectable to the at least one second node (20) via the first node (10) by the network slice provisioned by the fourth node (30).

10. A method as claimed in any of claims 6 to 9, wherein:
the QoS indicator is based on:
a first parameter indicative of a priority of a network slice to which the service is assigned relative to one or more other network slices; and/or
a second parameter indicative of a QoS for the service in the network slice.

11. A method performed by a fourth node (30) for provisioning network slices in a network, the method comprising:
provisioning (300) a network slice to be dedicated to at least one second node (20) that is incapable of handling network slices for providing a service for a user equipment, UE, from the at least one second node (20), wherein the network slice is provisioned to be dedicated to the at least one second node (20) for connecting the at least one second node (20) to a third node (40) for the third node (40) to assign a quality of service, QoS, indicator to the service, wherein the fourth node (30) is configured to itself detect the at least one second node (20) that is incapable of handling network slices and/or detect from another node the at least one second node (20) that is incapable of handling network slices.

12. A method as claimed in claim 11, wherein:
connecting the at least one second node (20) to the third node (40) is via a first node (10) for the first node (10) to assign the service to one of a plurality of network slices in the network based on the QoS indicator assigned to the service.

13. A method as claimed in claim 11 or 12, the method comprising:
creating a network slice dedicated to the at least one second node (20) to provision the network slice; or
dedicating an existing network slice to the at least one second node (20) to provision the network slice.

14. A system comprising any one or more of:
a first node (10) comprising processing circuitry (12) configured to perform the method steps in accordance with any of claims 1 to 5;
a third node (30, 40) comprising processing circuitry (32, 42) configured to perform the method steps in accordance with any of claims 6 to 10; and
a fourth node (30) comprising processing circuitry (32) configured to perform the method steps in accordance with any of claims 11 to 13.

15. A computer program comprising instructions which, when executed by processing circuitry, cause the processing circuitry to perform the method steps according to any of claims 1 to 5, any of claims 6 to 10, and/or any of claims 11 to 13.

## Patentansprüche

1. Verfahren, das von einem ersten Knoten (10) durchgeführt wird, zum Verwalten von Diensten in einem Netzwerk, wobei das Verfahren Folgendes umfasst:
als Reaktion auf das Empfangen eines Dienstes für eine Benutzereinrichtung, UE, von mindestens einem zweiten Knoten (20), der nicht in der Lage ist, mit Netzwerk-Slices zum Bereitstellen des Dienstes umzugehen:
Zuweisen (100) des Dienstes zu einem von einer Vielzahl von Netzwerk-Slices in dem Netzwerk auf Grundlage eines Dienstqualität-, QoS-, Indikators, der dem Dienst zugewiesen ist, wobei der erste Knoten (10) dazu konfiguriert ist, selbst den mindestens einen zweiten Knoten (20) zu detektieren, der nicht in der Lage ist, mit Netzwerk-Slices umzugehen, und/oder von einem anderen Knoten den mindestens einen zweiten Knoten (20) zu detektieren, der nicht in der Lage ist, mit Netzwerk-Slices umzugehen.

2. Verfahren nach Anspruch 1, wobei:
der QoS-Indikator dem Dienst durch einen dritten Knoten (30, 40) zugewiesen wird, der über den ersten Knoten (10) mit dem mindestens einen zweiten Knoten (20) verbindbar ist.

3. Verfahren nach Anspruch 2, wobei:
der dritte Knoten (40) durch einen Netzwerk-Slice, der von einem vierten Knoten (30) bereitgestellt wird, um für den mindestens einen zweiten Knoten (20) bestimmt zu sein, über den ersten Knoten (10) mit dem mindestens einen zweiten Knoten (20) verbindbar ist.

4. Verfahren nach einem der vorhergehenden Ansprüche, wobei:
der QoS-Indikator auf Folgendem basiert:
einem ersten Parameter, der eine Priorität des Netzwerk-Slices, dem der Dienst zugewiesen ist, relativ zu einem oder mehreren anderen Netzwerk-Slices angibt; und/oder
einem zweiten Parameter, der eine QoS für den Dienst in dem Netzwerk-Slice angibt.

5. Verfahren nach einem der vorhergehenden Ansprüche, wobei das Verfahren Folgendes umfasst:
kontinuierliches oder regelmäßiges Überprüfen des mindestens einen zweiten Knotens (20).

6. Verfahren, das von einem dritten Knoten (30, 40) durchgeführt wird, zum Verwalten von Diensten in einem Netzwerk, wobei das Verfahren Folgendes umfasst:
Zuweisen (200) eines Dienstqualität-, QoS-, Indikators zu einem Dienst für eine Benutzereinrichtung, UE, wobei der Dienst von mindestens einem zweiten Knoten (20) stammt, der nicht in der Lage ist, mit Netzwerk-Slices zum Bereitstellen des Dienstes umzugehen, wobei der dritte Knoten (30, 40) dazu konfiguriert ist, selbst den mindestens einen zweiten Knoten (20) zu detektieren, der nicht in der Lage ist, mit Netzwerk-Slices umzugehen, und/oder von einem anderen Knoten den mindestens einen zweiten Knoten (20) zu detektieren, der nicht in der Lage ist, mit Netzwerk-Slices umzugehen.

7. Verfahren nach Anspruch 6, wobei das Verfahren Folgendes umfasst:
Einleiten der Übertragung des QoS-Indikators, der dem Dienst zugewiesen ist, zu einem ersten Knoten (10) für den ersten Knoten (10), um den Dienst einem von einer Vielzahl von Netzwerk-Slices in dem Netzwerk auf Grundlage des QoS-Indikators zuzuweisen.

8. Verfahren nach Anspruch 7, wobei:
die Übertragung des QoS-Indikators über einen Netzwerk-Slice eingeleitet wird, der von einem vierten Knoten (30) bereitgestellt wird, um für den mindestens einen zweiten Knoten (20) bestimmt zu sein.

9. Verfahren nach Anspruch 8, wobei:
der dritte Knoten (40) durch den Netzwerk-Slice, der von dem vierten Knoten (30) bereitgestellt wird, über den ersten Knoten (10) mit dem mindestens einen zweiten Knoten (20) verbindbar ist.

10. Verfahren nach einem der Ansprüche 6 bis 9, wobei:
der QoS-Indikator auf Folgendem basiert:
einem ersten Parameter, der eine Priorität eines Netzwerk-Slices, dem der Dienst zugewiesen ist, relativ zu einem oder mehreren anderen Netzwerk-Slices angibt; und/oder
einem zweiten Parameter, der eine QoS für den Dienst in dem Netzwerk-Slice angibt.

11. Verfahren, das von einem vierten Knoten (30) durchgeführt wird, zum Bereitstellen von Netzwerk-Slices in einem Netzwerk, wobei das Verfahren Folgendes umfasst:
Bereitstellen (300) eines Netzwerk-Slices, um für mindestens einen zweiten Knoten (20) bestimmt zu sein, der nicht in der Lage ist, mit Netzwerk-Slices zum Bereitstellen eines Dienstes für eine Benutzereinrichtung, UE, umzugehen, von dem mindestens einen zweiten Knoten (20), wobei der Netzwerk-Slice bereitgestellt wird, um für den mindestens einen zweiten Knoten (20) zum Verbinden des mindestens einen zweiten Knotens (20) mit einem dritten Knoten (40) bestimmt zu sein, damit der dritte Knoten (40) dem Dienst einen Dienstqualität-, QoS-, Indikator zuweist, wobei der vierte Knoten (30) dazu konfiguriert ist, selbst den mindestens einen zweiten Knoten (20) zu detektieren, der nicht in der Lage ist, mit Netzwerk-Slices umzugehen und/oder, von einem anderen Knoten den mindestens einen zweiten Knoten (20) zu detektieren, der nicht in der Lage ist, mit Netzwerk-Slices umzugehen.

12. Verfahren nach Anspruch 11, wobei:
das Verbinden des mindestens einen zweiten Knotens (20) mit dem dritten Knoten (40) über einen ersten Knoten (10) erfolgt, damit der erste Knoten (10) den Dienst einem von einer Vielzahl von Netzwerk-Slices in dem Netzwerk auf Grundlage des QoS-Indikators, der dem Dienst zugewiesen ist, zuweist.

13. Verfahren nach Anspruch 11 oder 12, wobei das Verfahren Folgendes umfasst:
Erstellen eines Netzwerk-Slices, der für den mindestens einen zweiten Knoten (20) zum Bereitstellen des Netzwerk-Slices bestimmt ist; oder
Zuordnen eines bestehenden Netzwerk-Slices zu dem mindestens einen zweiten Knoten (20) zum Bereitstellen des Netzwerk-Slices.

14. System, umfassend eines oder mehrere von Folgendem:
einem ersten Knoten (10), der eine Verarbeitungsschaltung (12) umfasst, die dazu konfiguriert ist, die Verfahrensschritte nach einem der Ansprüche 1 bis 5 durchzuführen;
einem dritten Knoten (30, 40), der eine Verarbeitungsschaltung (32, 42) umfasst, die dazu konfiguriert ist, die Verfahrensschritte nach einem der Ansprüche 6 bis 10 durchzuführen; und
einem vierten Knoten (30), der eine Verarbeitungsschaltung (32) umfasst, die dazu konfiguriert ist, die Verfahrensschritte nach einem der Ansprüche 11 bis 13 durchzuführen.

15. Computerprogramm, das Anweisungen umfasst, die, wenn sie von einer Verarbeitungsschaltung ausgeführt werden, die Verarbeitungsschaltung dazu veranlassen, die Verfahrensschritte nach einem der Ansprüche 1 bis 5, nach einem der Ansprüche 6 bis 10 und/oder nach einem der Ansprüche 11 bis 13 durchzuführen.

## Revendications

1. Procédé réalisé par un premier nœud (10) pour gérer des services dans un réseau, le procédé comprenant :
en réponse à la réception d'un service pour un équipement utilisateur, UE, à partir d'au moins un deuxième nœud (20) qui est incapable de gérer des tranches de réseau pour fournir le service :
l'attribution (100) du service à l'une d'une pluralité de tranches de réseau dans le réseau en fonction d'un indicateur de qualité de service, QoS, attribué au service, dans lequel le premier nœud (10) est configuré pour détecter lui-même au moins un deuxième nœud (20) incapable de gérer des tranches de réseau et/ou détecter à partir d'un autre nœud au moins un deuxième nœud (20) incapable de gérer des tranches de réseau.

2. Procédé selon la revendication 1, dans lequel :
l'indicateur QoS est attribué au service par un troisième nœud (30, 40) qui est connectable à l'au moins un deuxième nœud (20) via le premier nœud (10).

3. Procédé selon la revendication 2, dans lequel :
le troisième nœud (40) est connectable à l'au moins un deuxième nœud (20) via le premier nœud (10) par une tranche de réseau provisionnée, par un quatrième nœud (30), pour être dédiée à l'au moins un deuxième nœud (20).

4. Procédé selon l'une quelconque des revendications précédentes, dans lequel :
l'indicateur QoS est basé sur :
un premier paramètre indiquant la priorité de la tranche de réseau à laquelle le service est affecté par rapport à une ou plusieurs autres tranches de réseau ; et/ou
un deuxième paramètre indicatif d'une QoS pour le service dans la tranche de réseau.

5. Procédé selon l'une quelconque des revendications précédentes, le procédé comprenant :
la vérification continue ou périodique de l'au moins un deuxième nœud (20).

6. Procédé mis en œuvre par un troisième nœud (30, 40) pour la gestion de services dans un réseau, le procédé comprenant : l'attribution (200) d'un indicateur de qualité de service, QoS, à un service pour un équipement utilisateur, UE, dans lequel le service provient d'au moins un deuxième nœud (20) incapable de gérer des tranches de réseau pour fournir le service, dans lequel le troisième nœud (30, 40) est configuré pour détecter lui-même l'au moins un deuxième nœud (20) incapable de gérer des tranches de réseau et/ou détecter à partir d'un autre nœud l'au moins un deuxième nœud (20) incapable de gérer des tranches de réseau.

7. Procédé selon la revendication 6, le procédé comprenant : l'initiation de la transmission de l'indicateur QoS attribué au service vers un premier nœud (10) pour que le premier nœud (10) attribue le service à l'une d'une pluralité de tranches de réseau du réseau en fonction de l'indicateur QoS.

8. Procédé selon la revendication 7, dans lequel :
la transmission de l'indicateur QoS est initiée via une tranche de réseau qui est provisionnée, par un quatrième nœud (30), pour être dédiée à au moins un deuxième nœud (20).

9. Procédé selon la revendication 8, dans lequel :
le troisième nœud (40) est connectable à l'au moins un deuxième nœud (20) via le premier nœud (10) par la tranche de réseau provisionnée par le quatrième nœud (30).

10. Procédé selon l'une quelconque des revendications 6 à 9, dans lequel :
l'indicateur QoS est basé sur :
un premier paramètre indiquant d'une priorité d'une tranche de réseau à laquelle le service est affecté par rapport à une ou plusieurs autres tranches de réseau ; et/ou
un deuxième paramètre indicatif d'une QoS pour le service dans la tranche de réseau.

11. Procédé mis en œuvre par un quatrième nœud (30) pour la fourniture de tranches de réseau dans un réseau, le procédé comprenant :
provisionnement (300) d'une tranche de réseau à dédier à au moins un deuxième nœud (20) incapable de gérer des tranches de réseau pour fournir un service à un équipement utilisateur, UE, à partir de l'au moins un deuxième nœud (20), dans lequel la tranche de réseau est provisionnée pour être dédiée à l'au moins un deuxième nœud (20) afin de connecter l'au moins un deuxième nœud (20) à un troisième nœud (40) pour que le troisième nœud (40) attribue un indicateur de qualité de service, QoS, au service, dans lequel le quatrième nœud (30) est configuré pour détecter lui-même l'au moins un deuxième nœud (20) incapable de gérer des tranches de réseau et/ou détecter à partir d'un autre nœud l'au moins un deuxième nœud (20) incapable de gérer des tranches de réseau.

12. Procédé selon la revendication 11, dans lequel :
la connexion de l'au moins un deuxième nœud (20) au troisième nœud (40) se fait via un premier nœud (10) pour que le premier nœud (10) attribue le service à l'une d'une pluralité de tranches de réseau du réseau en fonction de l'indicateur QoS attribué au service.

13. Procédé selon la revendication 11 ou 12, le procédé comprenant :
la création d'une tranche de réseau dédiée à l'au moins un deuxième nœud (20) pour provisionner la tranche de réseau ; ou l'affectation d'une tranche de réseau existante à l'au moins un deuxième nœud (20) pour provisionner la tranche de réseau.

14. Système comprenant un ou plusieurs des éléments suivants :
un premier nœud (10) comprenant un circuit de traitement (12) configuré pour réaliser les étapes du procédé selon l'une quelconque des revendications 1 à 5 ;
un troisième nœud (30, 40) comprenant un circuit de traitement (32, 42) configuré pour réaliser les étapes de procédé selon l'une quelconque des revendications 6 à 10 ; et
un quatrième nœud (30) comprenant un circuit de traitement (32) configuré pour réaliser les étapes de procédé conformément à l'une quelconque des revendications 11 à 13.

15. Programme informatique comprenant des instructions qui, lorsqu'elles sont exécutées par un circuit de traitement, amènent le circuit de traitement à réaliser les étapes de procédé selon l'une quelconque des revendications 1 à 5, l'une quelconque des revendications 6 à 10 et/ou l'une quelconque des revendications 11 à 13.
